# EUROPÄISCHE PATENTSCHRIFT

(11) **EP 0 709 021 B1**
(45) Veröffentlichungstag und Bekanntmachung des Hinweises auf die Patenterteilung: **24.01.2001**
(21) Anmeldenummer: 95115055.6
(22) Anmeldetag: 25.09.1995
(51) Int. Cl.: A01J 25/12

(54) **Vorrichtung zum Schneiden von Käsemassen**
Apparatus for cutting cheese bulks
Dispositif pour la coupe de masses de fromage

(30) Priorität: 25.10.1994 CH 319494
(43) Veröffentlichungstag der Anmeldung: 01.05.1996
(73) Patentinhaber: KALT SÖHNE AG, CH-9235 Lütisburg (CH)
(72) Erfinder: Kalt, Franz, CH-9235 Lütisburg (CH)
(74) Vertreter: Révy von Belvárd, Peter

(56) Entgegenhaltungen:
- EP-A- 0 165 091
- EP-A- 0 538 175
- DE-A- 1 561 489
- DE-A- 2 303 159
- FR-A- 1 421 060
- FR-A- 2 659 044
- FR-A- 2 679 736
- FR-A- 2 707 201
- US-A- 4 705 470
- PATENT ABSTRACTS OF JAPAN vol. 18 no. 435 (M-1655) ,15.August 1994 & JP-A-06 134697 (SHINKAI SETSUO) 17.Mai 1994,
- ALFA-LAVAL 'MECHANISATIE VAN DE PRODUKTIELIJNEN IN DE KAASMAKERIJ' Februar 1971

## Beschreibung

Die Erfindung betrifft eine Vorrichtung zum Schneiden von Käsemassen entsprechend dem Oberbegriff des Anspruchs 1.

Die Formgebung von Käsemassen erfolgt entweder in Formpressen oder einfach durch Ausschneiden aus einer in einer Wanne befindlichen, vorher verfestigten Käsemasse. In letzterem Falle war bisher viel teure Handarbeit erforderlich, wobei die Schnittqualität nicht immer gesichert war und grosses Augenmerk auf die sanitären Verhältnisse gelegt werden musste.

Nebst dem Schneiden der Käsemasse ist es wichtig, dass die geschnittenen Käse schonend und mit möglichst kleinem Aufwand zur Weiterbearbeitung aus der Wanne auf eine Ablagefläche gebracht werden können. Aus der EP 538 175 A1 ist eine Press- und Schneidvorrichtung bekannt, bei der in einer Wanne ein erstes Förderband angeordnet ist, das die Käsemasse gegen eine als Schneidwand ausgebildete Schmalseite der Wanne fördert. Die Schneidwand muss hochgehoben werden können und an ihrem unteren Rand eine Schneidfläche umfassen. Ausserhalb der Wanne ist im Anschluss an das erste Förderband ein zweites vorgesehen. Nach dem Vorschieben der gesamten auf dem ersten Förderband liegenden Käsemasse wird die Schneidewand schneidend durch die Käsemasse nach unten bewegt. Die abgeschnittene und ausserhalb der Wanne auf dem zweiten Förderband liegende Käsemasse wird überschlagend auf ein drittes Förderband übertragen.

Die Lösung gemäss der EP 538 175 A1 hat den Nachteil, dass in der Wanne ein antreibbares Förderband vorgesehen werden muss. Dies führt zu einem komplizierten Aufbau und zu hohen Anlagekosten. Das Förderband muss so ausgelegt sein, dass es den Pressdruck aufnehmen bzw. übertragen kann. Trotzdem sollte die Reibung zwischen dem Förderband und dem das Band stützenden Wannenboden bzw. der Tragstruktur unter dem Förderband minimal sein. Der Antrieb des Förderbandes muss so ausgelegt sein, dass das Förderband mit der gesamten Käsemasse über die Tragstruktur bewegbar ist. Im Antriebsbereich und bei der Schneidwand treten zudem Dichtungsprobleme auf. Aufgrund der unvermeidbaren Gleitkontakte zwischen Band- und Wannenteilen tritt ein erhöhter Verschleiss auf. Der komplizierte Aufbau der mit der Käsemasse in Kontakt stehenden Anlagenteile führt zu einem äusserst grossen Reinigungsaufwand.

Beim Übertragen der geschnittenen Käsemassen vom ersten zum zweiten und insbesondere vom zweiten zum dritten Förderband entstehen in der Käsemasse zuweilen Bruchflächen und/oder es brechen Eckbereiche ab.

Der Erfindung liegt daher die Aufgabe zugrunde, eine einfach aufgebaute Anlage zu finden, die eine gute und gleichmässige Schnittqualität sowie eine beschädigungsfreie Weiterführung der geschnittenen Käsemassen auf eine Auflagefläche ermöglicht. Eine Verbesserung der sanitären Ausgangsbedingungen soll sichergestelt werden. Zudem soll vorzugsweise mindestens eine teilweise Automatisierung gewährleistet sein und so zu den genannten Zielen, auch unter Verbilligung der Betriebskosten, beigetragen werden.

Diese Aufgabe wird durch die Merkmale des Anspruches 1, insbesondere aber auch durch die Merkmale des Anspruches 2 gelöst.

Bei der erfindungsgemässen Lösung ist die Schneideinrichtung zur gewünschten Schnittposition bewegbar. Die Käsemasse muss nicht in der Wanne bewegt werden und es kann somit auf ein Förderband verzichtet werden. Die Haltevorrichtung ermöglicht ein schonendes Hochheben der geschnittenen Käsemassen. Es muss also nicht, wie bei der Lösung mit dem Förderband, die ganze Käsemasse bewegt werden. Die Wanne und die Schneideinrichtung mit Haltevorrichtung sind gut zugänglich und somit einfach zu reinigen.

Weitere Einzelheiten der Erfindung ergeben sich an Hand der nachfolgenden Beschreibung von an Hand der schematischen Zeichnung besprochenen Ausführungsbeispielen. Es zeigen:
- Fig. 1: eine schematisierte, teilweise weggebrochene Perspektivansicht einer erfindungsgemässen Vorrichtung, von der die
- Fig. 2: ein Detail in Seitenansicht veranschaulicht und
- Fig. 3: eine Vorderansicht im Sinne des Pfeiles III der Fig. 1 einer bevorzugten Ausführungsform ist.

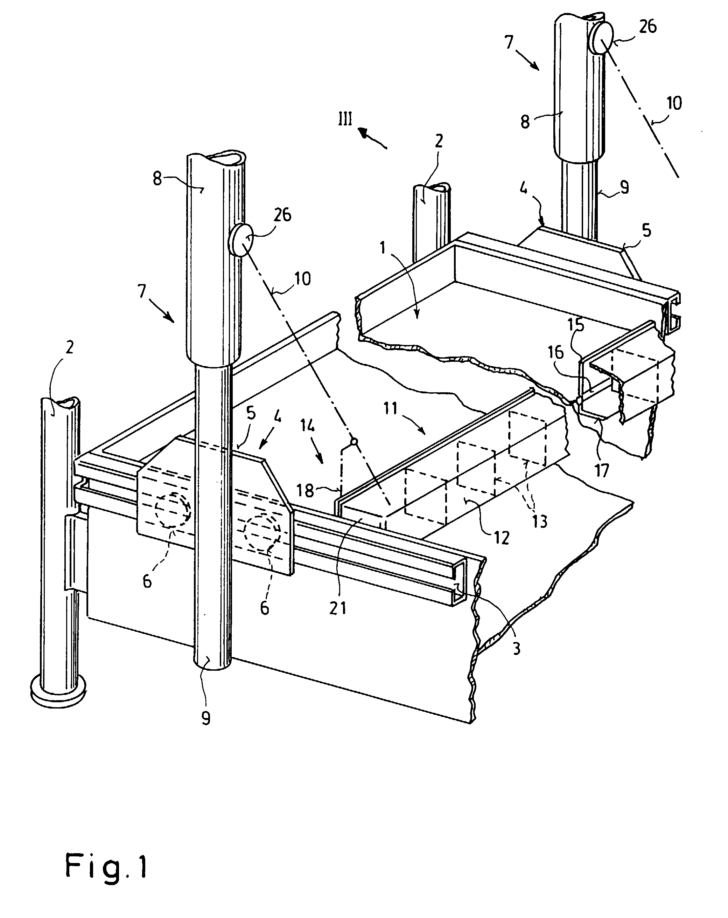

Eine Wanne 1 zur Aufnahme von Käsemasse steht auf vier Säulen 2, von denen in Fig. 1 nur zwei zu sehen sind. Nicht gezeigt ist eine oberhalb der Wanne 1 befindliche, an sich bekannte Pressvorrichtung, mit deren Hilfe die in der Wanne 1 befindliche Käsemasse zusammengepresst werden kann. Diese Pressvorrichtung wird nach dem Pressvorgange wieder in ihre oberhalb der Wanne 1 befindliche Lage zurückgestellt.

Die Wanne 1 kann ein relativ grosses Ausmass besitzen, so dass die darin befindliche, gepresste Käsemasse anschliessend in einzelne Quader zerteilt werden muss, Zu diesem Zwecke ist an der Aussenseite der Wanne 1 an einander gegenüberliegenden Seiten je eine horizontale Führungseinrichtung in Form von zwei zueinander parallelen, etwa U-förmigen Führungsschienen 3 (nur eine ist sichtbar) montiert. Es versteht sich aber, dass eine solche Führung nicht unbedingt erforderlich ist, da es möglich wäre, die nachstehend beschriebene Anordnung auch am Boden, neben der Wanne 1 oder an der Decke befestigten Schienen fahren zu lassen.

In den Führungsschienen 3 fährt an jeder Seite ein Wagen 4, der im wesentlichen aus einem Lagerschild 5 und daran gelagerten Rollen 6 besteht. Der Wagen 4 kann überdies auch einen eigenen Antrieb, z.B. einen auf die Räder 6 wirkenden Motor, wie einen Schrittmotor, besitzen, es kann aber auch am Lagerschild 5 ein Linearantrieb, wie ein fluidischer Zylinder, angreifen, oder die Wagen 4 sind einfach von Hand aus entlang der Schienen 3 verstellbar. Eine andere Möglichkeit bestünde darin, die Schienen 3 mit einem elektrischen Linearmotor auszustatten.

Jeder Lagerschild 5 trägt einen Hubantrieb 7, der an sich als elektrischer Antrieb ausgebildet sein könnte, bevorzugt aber ein fluidischer Antrieb, insbesondere ein pneumatischer Zylinder 8 an einer am Lagerschild 5 befestigten Kolbenstange 9 ist. Dieser Hubantrieb trägt über eine Verbindungsstrebe 10 eine Schneidvorrichtung, bevorzugt in Form eines Messerbalkens 11. An sich wäre es auch denkbar, an Stelle des Messerbalkens 11 eine nach Art einer Säge bewegliche Schneidvorrichtung vorzusehen, doch ist der nachstehend beschriebene Messerbalken 11 konstruktiv einfacher und zweckentsprechender.

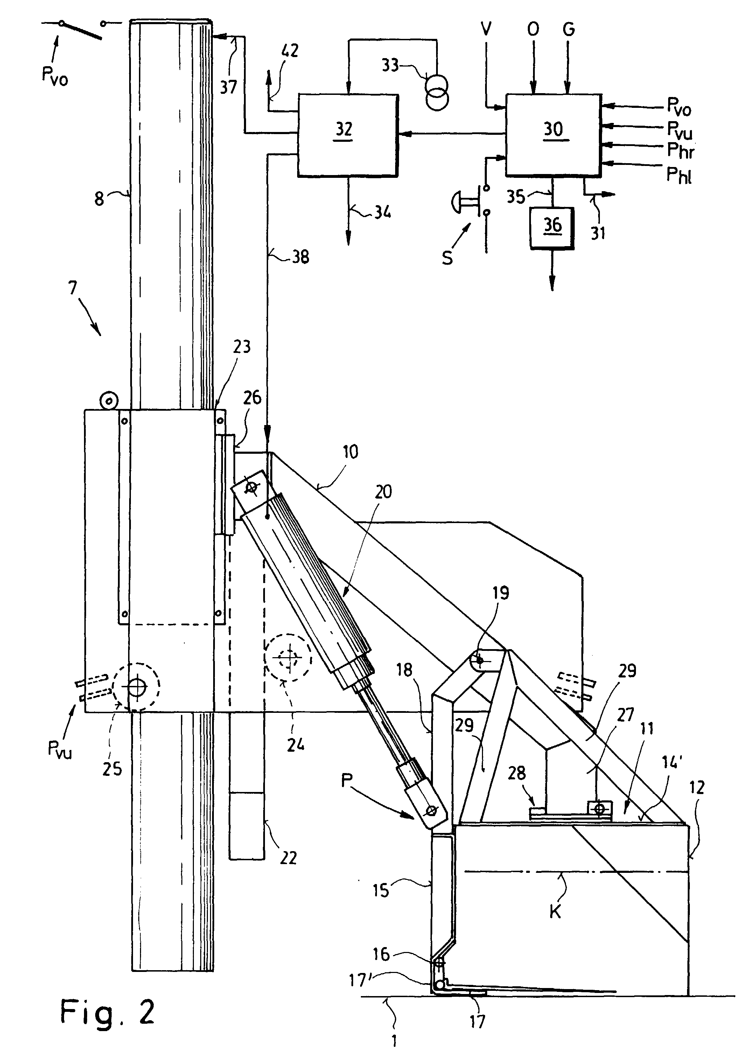

Wie aus Fig. 1, und deutlicher aus Fig. 2, ersichtlich ist, besteht der Messerbalken 11 aus einem vertikalen Messerblatt 12, das von oben her in die Käsemasse abgesenkt wird, deren Niveau in Fig. 2 durch eine horizontale, strich-punktierte Linie K angezeigt ist. Am vertikalen Messerblatt sind in, vorzugsweise gleichmässigen, Abständen Unterteilungsmesser 13 befestigt. Nach oben hin sind die Messer 12, 13 durch eine Abdeckung 14' abgeschlossen, an der die Streben 10 befestigt sind.

Sobald eine Reihe von Käsequadern aus der Masse ausgeschnitten sind, besteht das Problem, diese einzelnen Quader aus der Wanne 1 zu heben. Dieses Problem wird mit Hilfe einer Greifvorrichtung 14 gelöst, die eine den Käsequader nach vorne zu einschliessende Wand 15 und eine an einer durchlaufenden Achse 16 dieser Wand 15 angelenkte Greiffläche 17 aufweist. Ferner ist ein Antriebsarm 18 vorgesehen, der in Fig. 1 lediglich strichliert angedeutet, aber in Fig. 2 im einzelnen ersichtlich ist. Dieser Antriebsarm trägt die Wand 15 und ist an der Strebe 10 um eine Achse 19 schwenkbar befestigt.

Wenn daher der Arm 18 gemäss Fig. 2 mit Hilfe eines Schwenkantriebes 20, zweckmässig in Form eines pneumatischen Zylinderaggregates, im Sinne des Pfeiles P aus einer offenen Lage in die in Fig. gezeigte Geschlossenlage bewegt wird, so schleift die Greiffläche 17 zunächst unter ihrem Eigengewicht entlang des Bodens der Wanne 1 und reinigt diesen gleichzeitig von allfälligen Resten der Käsemasse. Sobald die Geschlossenlage gemäss Fig. 2 erreicht ist, hat sich die Greiffläche 17 unter die Reihe der ausgeschnittenen Käsequader im Messerbalken 11 geschoben. In dieser Stellung wird die Greiffläche in nicht dargestellter, an sich beliebiger Weise mittels einer Fixiereinrichtung verriegelt. Diese Fixiereinrichtung kann von von den Stirnwänden 21 des Messerbalkens 11 getragenen, sich unter die Greiffläche 17 (bevorzugt unter einen mit dieser Fläche verbundenen Teil) bei deren Bewegung in die Geschlossenlage schiebenden Haltevorsprung gebildet sein, es könnte aber auch dazu ein, z.B. pneumatisch, betätigter, etwa entlang des Armes 18 abwärts verschiebbarer Sperriegel im Bereiche der Achse 16 derart hinter den nach oben abgewinkelten Teil 17' der Greiffläche 17 bewegbar sein, dass diese in der Geschlossenlage fixiert ist. Die, bevorzugte, pneumatische Betätigung kann aber auch so erfolgen, dass ein den jeweiligen, hier nicht dargestellten, pneumatischen Zylinder steuerndes Ventil (siehe Ventilblock 32) in eine Sperrstellung gebracht wird, d.h. entweder in eine Stellung, in der der zugehörige Kolben gegen die Sperrstellung hin mit Druckmedium beaufschlagt ist oder (z.B. bei doppeltwirkenden Kolben) in eine Mittelstellung, in der in den Zylinder eingebrachtes Druckmedium nicht entweichen kann.

Nun kann der Messerbalken 11 die Reihe der ausgeschnittenen Käsequader aus der Wanne 1 durch Betätigen des Hubantriebes 7 entnehmen. Hiezu kann zur Führung, zweckmässig an der starren Kolbenstange 9 (Fig. 1), gegebenenfalls auch an einem gesonderten Führungsprofil 22, mit dem Zylinder 8 ein Wagen 23 mit Rädern 24, 25 vorgesehen sein. Der Wagen 23 wirkt zweckmässig mit Positionssensoren in Form von Endschaltern Pvu und Pvo zusammen, um so eine einwandfreie Funktion zu sichern. Ahnliche Positionssensoren O und G können, wie später noch erläutert wird, für die Offen- und die Geschlossenstellung der Wand 15, z.B. am Schwenkantrieb 20, vorgesehen werden. Wie ersichtlich, ist der Wagen 23 am Zylinder 8 befestigt und trägt an einer Konsolplatte 26 einerseits die Strebe 10 und anderseits das Zylinderaggregat des Schwenkantriebes 20. Am unteren freien Ende der Strebe 10 ist ein Befestigungsfuss 27 mit einer leicht lösbaren Schnellbefestigung 28 für den Messerbalken 11 vorgesehen. Die Schnellbefestigung kann, wie angedeutet, als Bajonettring zum Eingriff mit einem entsprechenden Teil des Messerbalkens 11 in einen Bajonettschlitz des Ringes oder auch als lösbare Schnappverbindung an sich bekannter Art ausgebildet sein. Dadurch ist es möglich, für Käsequader verschiedener Grössen und/oder Form unterschiedliche Messerbalken 11 am Befestigungsfuss 27 anzubringen. Zur grösseren Stabilität des Messerbalkens ist zweckmässig eine Zweipunktbefestigung vorgesehen, und zu diesem Zwecke können an der Abdeckung 14' Holme 29 vorzusehen, die an der Achse 19 befestigbar, beispielsweise einhängbar, sind.

An sich wäre es möglich, die verschiedenen Antriebe von Hand aus nacheinander zu betätigen. Um aber all diese Bewegungen zu koordinieren und damit eine bessere Schnittqualität zu erzielen, gleichzeitig aber auch einen automatisierten, rascheren und kostengünstigen Betrieb zu ermöglichen, ist vorzugsweise eine Programmvorrichtung 30 vorgesehen. Die Art der Programmvorrichtung 30 ist für die Erfindung nicht wesentlich, d.h. es könnte sich beispielsweise um ein Nockenwerk, um Lochkarten oder um eine Reihe von Kontaktscheiben handeln, die zu einem Umlaufe angetrieben sind. Bevorzugt ist eine elektronische Programmvorrichtung, z.B. mit einem Mikroprozessor 30. Dieser funktioniert im vorliegenden Ausführungsbeispiel, wie folgt.

Nachdem das Programm durch Betätigen eines Handschalters S eingeschaltet wurde, zählt ein im Programmwerk 30 enthaltener Taktgenerator mit Zähler die einzelnen Schritte. Der erste Schritt mag der über eine Steuerleitung 31 abgegebene Befehl an eine Transportvorrichtung (nicht gezeigt) zur Zufuhr von Käsemasse in die Wanne 1 sein. Dieser Schritt wird entweder zeitlich gesteuert (unter der Voraussetzung, dass die Transportvorrichtung für eine gleichmässige Belieferung pro Zeiteinheit ausgebildet ist), sie kann gewichtsabhängig gesteuert sein, indem die Wanne 1 beispielsweise auf Gewichtsmessdosen lagert oder es kann eine Transportvorrichtung mit gleichmässiger Zufuhr sich über die Wanne 1 hinwegbewegen, wobei ein Endschalter am Ende dieser Bewegung die vollständige Füllung der Wanne 1 anzeigt. In jedem Falle führt dies, bei einer solchen vorteilhaften Ausbildung, zu einem Signal V, das an den Mikroprozessor 30 abgegeben wird und dort den nächsten Schritt auslöst.

Als nächstes erfolgt die Betätigung der bereits erwähnten, hier nicht gezeigten Pressvorrichtung, indem der Mikroprozessor 30 ein Signal an einen Ventilblock 32 abgibt. Dieser Ventilblock ist an eine Fluidquelle 33, insbesondere eine Druckluftquelle, angeschlossen und verteilt dieses Fluid auf Grund der Befehle des Mikroprozessors 30 zu den gegebenen Zeiten an verschiedene Ausgangsleitungen. Dementsprechend wird über eine Ausgangsleitung 34 ein Absenken der Pressvorrichtung gegen die in der Wanne 1 befindliche Käsemasse veranlasst. Auch hier kann der Vorgang wiederum zeitlich gesteuert sein, indem für das Absenken und Pressen eine vorbestimmte, durch den Taktgeber des Mikroprozessors 30 gemessene Zeit vorgegeben wird, oder durch Endschalter, ähnlich den Endschaltern Pvo, Pvu des Zylinders 8, oder es ist für das Absenken bzw. Pressen eine Schrittsteuerschaltung vorgesehen, deren einzelne Schritte gezählt werden. Ist das Pressen beendet, so fährt die Pressvorrichtung wieder aufwärts, und zwar bevorzugt über einen fluidischen, wie pneumatischen, Antrieb (wobei für die Abwärts- und die Aufwärtsbewegung ein doppelt wirkendes Zylinderaggregat vorgesehen ist) oder indem der jeweilige Zylinder mit einer Rückstellfeder ausgerüstet ist. Bei der gezeichneten Ausführung ist jeweils nur eine einzige Fluidleitung für eine der Bewegungen dargestellt, doch muss im Falle eines doppelt wirkenden Aggregates natürlich eine jeweils dazu komplementäre, zweite Leitung für die entgegengesetzte Bewegung vorgesehen werden. Wenn im Rahmen dieser Beschreibung von einem "fluidischen" Antrieb die Rede ist, so versteht es sich, dass es auch ein hydraulischer Antrieb sein könnte, doch sind pneumatische Antriebe wegen der geringeren Verunreinigungsgefahr bevorzugt.

Sobald der Pressvorgang abgeschlossen ist und eine gleichmässige Käsemasse mit konstantem Niveau K über den gesamten Querschnitt der Wanne 1 vorliegt, kann mit dem Schneiden begonnen werden. Zu diesem Zwecke kann zunächst über eine Leitung 35 ein Signal an eine Motoransteuerung eines Fahrantriebes für die Räder 6 des Wagens 4 abgegeben werden, um diesen in die jeweils richtige Anfangsstellung zu bringen. Es wurde schon gesagt, dass an Stelle eines elektrischen Antriebes auch ein fluidischer Fahrantrieb vorgesehen sein kann, in welchem Falle die Betätigung über den Ventilblock 32 erfolgen wird. Es ist aber klar, dass einzelne der Bewegungen, wie etwa diese Positionierung, auch von Hand aus durchgeführt werden könnten, was aber im Sinne eines angestrebten vollautomatischen Betriebes im allgemeinen nicht bevorzugt sein wird.

Sobald der Wagen 4 richtig positioniert ist, kann mit dem Absenken des Messerbalkens 11 begonnen werden. Zu diesem Zwecke erhält der Ventilblock 32 einen entsprechenden, z.B. binär codierten, Befehl vom Mikroprozessor 30 und betätigt den Zylinder 8 über eine Leitung 37. Der untere Endschalter Pvu gibt bei Anlangen des Wagens 23 in der unteren Position ein Signal ab, das, wie ersichtlich, dem Mikroprozessor 30 zugeleitet wird. In diesem Augenblick haben die verschiedenen Messer 12, 13 die Käsemasse bis zum Boden der Wanne 1 durchtrennt. Somit kann der nächste Schritt eingeleitet werden.

Dieser Schritt besteht darin, dass zunächst die Leitung 37 auch gegen Rückströmen des Fluides gesperrt wird und über eine Leitung 38 der Schwenkzylinder 20 betätigt wird. Dieser Zylinder 20 bewirkt aus der Offenstellung der Wand 15 heraus eine Bewegung derselben im Sinne des Pfeiles P, bis die in Fig. 2 gezeigte Geschlossenlage erreicht ist. Es ist, wie schon erwähnt, zweckmässig, die jeweilige Position des Schwenkantriebes über entsprechende Sensoren mit Ausgangssignalen O und G dem Mikroprozessor mitzuteilen. Andere Möglichkeiten sind die oben erwähnten, nämlich eine blosse zeitabhängige Steuerung oder eine Schrittsteuerung. Sobald die Wand 15 geschlossen und die Greiffläche in ihrer horizontalen Lage mit Hilfe der oben erläuterten Fixiereinrichtung gesperrt ist, kann die Aufwärtsbewegung des Messerbalkens 11 beginnen, was entweder durch eine im Zylinder 8 eingebaute Rückstellfeder oder über eine zweite, am unteren Ende des Zylinders 8 befestigte Zufuhrleitung für Druckluft erfolgt.

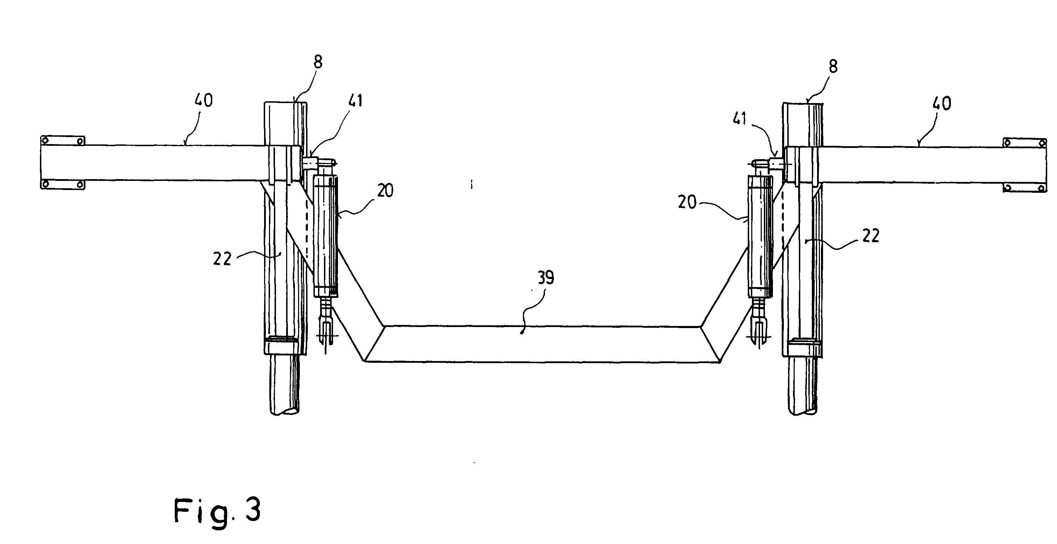

Nun liegt der Reihe von aus der Wanne 1 gehobenen Käsequadern vor, und es kann dieselbe entweder durch Abmontieren des Messerbalkens 11 vom Fuss 27 und Ersatz durch einen anderen Messerkasten entnommen werden, es kann aber auch eine Tragfläche bzw. ein Transportband unter den hochgehobenen Messerkasten geschoben und die Wand 15 mittels des Schwenkantriebes 20 - nach Lösen der schon erwähnten Sperre für die Wand 17 bzw. gegebenenfalls auch 15 - geöffnet werden. Die letztere Lösung bedeutet aber zusätzlichen Aufwand für die Führung und den Verschiebeantrieb eines solchen Transportbandes bzw. der Abstellfläche. Es ist deshalb bevorzugt, wenn eine Ausführung gewählt wird, wie sie nun an Hand der Fig. 3 beschrieben wird.

Es wurde bereits erwähnt, dass die beiden Wagen 4 mit einem Fahrantrieb ausgestattet sein könnten. In diesem Falle sind zwei Lösungen denkbar: Entweder jeder der Wagen 4 besitzt einen gesonderten Antrieb, wobei beide Antriebe miteinander derart synchronisiert werden, dass der Messerbalken stets parallel verschoben wird. Eine solche Synchronisierung ist am einfachsten durch Schrittmotore und eine gemeinsame Ansteuerung zu verwirklichen, wobei auch noch der Vorteil der Positionsgenauigkeit besteht, da die Anzahl der von der Ansteuerung vorgegebenen Schritte exakt die Grösse der Käsequader in Verschieberichtung des Messerbalkens 11 bestimmt.

Immerhin wäre bei einer solchen oder einer ähnlichen Lösung je ein Antrieb für die beiden Wagen 4 samt einer Synchronisieranordnung nötig. Dieser Aufwand lässt sich durch eine mechanische Verbindung der beiden Zylinder 8 durch einen Querbalken 39 zu vermeiden, wie er aus Fig. 3 ersichtlich ist. Dabei sind in Fig. 3 alle diejenigen Details weggelassen, die oben bereits im einzelnen besprochen wurden. Der Querbalken 39 ist in der ersichtlichen Weise geknickt, wobei bei dieser Ausführungsform an den Zylindern 8 unmittelbar horizontal verlaufende Zylinder 40 befestigt sind, deren Kolbenstangen 41 die Schwenkantriebe 20 samt den (hier nicht dargestellten) Streben 10 (vgl. Fig. 1, 2) tragen. Daher ist der an den Streben befestigte Messerbalken 11 nicht nur heb- und senkbar, sondern auch mit Hilfe der Zylinder 40 seitlich bewegbar, wobei zwei Fälle denkbar sind: Entweder ist der Messerbalken kürzer ausgebildet, als es der Breite der Wanne 1 entspricht; dann kann er in ähnlicher Weise wie er durch die Wagen 4 in der einen Richtung verfahrbar ist, mit Hilfe der Zylinder nach Art eines Kreuzschlittens auch in einer dazu senkrechten Richtung verfahren werden, so dass der kleinere (und daher leichter zu handhabende) Messerbalken dennoch jede Stelle innerhalb der Wanne 1 erreichen kann. Oder der Horizontalantrieb 40 (und dies ist bevorzugt) wird dazu benützt, den Messerbalken 11 aus dem Bereiche der Wanne 1 seitlich zu verschieben, so dass sein mit Hilfe der Greiffläche 17 gehaltener Inhalt auf eine Abstellfläche oder ein Transportband abgelegt werden kann, das seitlich der Wanne 1 anzuordnen ist. Hiezu wird der Messerbalken 11 gegen das Transportband bewegt und mittels des Aggregates 20 eine Bewegung im Gegensinne zum Pfeil P der Fig. 2 durchgeführt, so dass die Käsequader nach unten zu und seitlich freigegeben werden, sich am Transportband absetzen und so, z.B. zu einer Verpackungsmaschine, abtransportiert werden.

Dementsprechend kann aber auch das Programmwerk 30 über Mittel zur Steuerung dieses Horizontalantriebes 40 verfügen, wobei die Zylinder 40 auf Grund eines Befehles des Mikroprozessors 30 (Fig. 2) über (mindestens) eine Leitung 42 vom Ventilblock 32 angesteuert werden. Anschliessend erteilt der Mikroprozessor den Befehl an den Schwenkantrieb 20, in die Offenstellung (entgegen dem Pfeile P in Fig. 2) zu fahren, um die im Messerbalken 11 befindliche Reihe von Käsequadern auf die Abstellfläche oder das Transportband abzulagern. Sodann kann der Messerbalken in der seitlich ausgefahrenen Position verbleiben, damit die Pressvorrichtung für die nächste Käsemasse wieder abgesenkt werden kann.

Es ist ersichtlich, dass auf diese Weise jegliche Stufe der Automatisierung bis hin zum vollautomatischen Betrieb möglich ist, wobei gleichzeitig eine hohe Schnittgenauigkeit und Qualität gesichert wird.

Im Rahmen der Erfindung sind verschiedene Variationen möglich; beispielsweise kann der Horizontalantrieb 40 statt an den Zylindern 8 befestigt zu sein, eine selbständige, gesondert gelagerte Einheit sein. Statt jeweils eines einzigen Zylinders kann auch eine andere Antriebsvorrichtung für die horizontale Querbewegung angeordnet werden. Und schliesslich kann auch das Entladen des Messerbalkens 11 etwa auch durch Weglassen der Stirnwände 21 und durch Hindurchschieben der Käsequadern auf die genannte Abstellfläche erfolgen, obwohl eine solche Lösung nicht bevorzugt ist. Ferner wurde bereits erwähnt, dass die Schneideinrichtung verschieden ausgebildet sein könnte; beispielsweise könnte jeweils ein einziges Messerblatt 12 mittels der Wagen 4 in der einen Richtung und anschliessend mittels in senkrechter Richtung dazu verfahrbaren Wagen zur Durchführung der senkrechten Schnitte (an Stelle der Blätter 13) benutzt werden. Wenn auch die Wand und die Greiffläche in der dargestellten Ausführungsform aneinander angelenkt sind, so wäre es doch denkbar, für die Greiffläche 17 einen gesonderten Antrieb vorzusehen, oder die Wand 15 ebenfalls als Messerblatt auszubilden und die Greiffläche darunterzuschieben. Eine weitere Variante kann darin bestehen, dass an Stelle von Käsequadern dreieckförmige Käseecken ausgeschnitten werden, etwa indem die Blätter 13, statt parallel zueinander, in einem Winkel zueinander angeordnet werden. Durch entsprechende Formung der Messerblätter wären aber auch andere Ausstechformen möglich.

## Patentansprüche

1. Vorrichtung zum Schneiden von in einer Wanne (1) befindlicher verfestigter Käsemasse und zum Übertragen der geschnittenen Käsemassen auf eine Aufnahmefläche mit einer mittels eines Hubantriebes (7, 8, 9) in die Käsemasse absenkbaren und hochhebbaren Schneideinrichtung (11) mit einem vertikalen Messerblatt (12), **dadurch gekennzeichnet**, dass die Schneideinrichtung (11) in mindestens einer Wannenrichtung über die ganze Wanne (1) verfahrbar und das Messerblatt (12) quer dazu über die gesamte Wannenbreite wirksam ist und die Schneideinrichtung (11) eine Haltevorrichtung (15, 17, 20) mit einer unter die Käsemasse bewegbaren Greiffläche (17) umfasst, wobei die Haltevorrichtung (15, 17, 20) die geschnittenen Käsemassen bei der Bewegung der Schneideinrichtung (11) vom Wannenboden nach oben in dieser zurück hält.

2. Vorrichtung nach Anspruch 1, dadurch gekennzeichnet, dass mindestens ein zweiter Antrieb (20, 40) zum Bewegen mindestens eines Teiles der Schneideinrichtung (11) vorgesehen ist, und dass zur Koordination der Antriebe vorzugsweise eine Programmeinrichtung (30), wie ein Mikroprozessor, vorgesehen ist.

3. Vorrichtung nach Anspruch 2, dadurch gekennzeichnet, dass mit Hilfe der Programmeinrichtung (30) auch eine Pressvorrichtung für die in der Wanne (1) befindliche Käsemasse steuerbar ist.

4. Vorrichtung nach Anspruch 2 oder 3, dadurch gekennzeichnet, dass mit Hilfe der Programmeinrichtung (30) auch eine Zufuhreinrichtung für Käsemasse in die Wanne (1) steuerbar ist.

5. Vorrichtung nach einem der vorhergehenden Ansprüche, dadurch gekennzeichnet, dass ein Messerbalken (11) mit senkrecht zueinander stehenden Messerblättern (12, 13) vorgesehen ist, und dass bevorzugt eine bewegliche, in der Geschlossenlage vertikale Wand (15) an eine offene Seite des Messerbalkens mit Hilfe eines Schwenkantriebes (20) anlegbar ist.

6. Vorrichtung nach einem der vorhergehenden Ansprüche, dadurch gekennzeichnet, dass eine unter die Käsemasse schiebbare Greiffläche (17) mit Hilfe eines Antriebes (20) unter die jeweils ausgeschnittenen Käsestücke bringbar und zweckmässig in dieser Lage mittels einer steuerbaren Fixiereinrichtung verriegelbar ist.

7. Vorrichtung nach Anspruch 6, dadurch gekennzeichnet, dass die Fixiereinrichtung über ein sie steuerndes Ventil (32) pneumatisch betätigbar ist und das Ventil (32) in eine Sperrstellung bringbar ist.

8. Vorrichtung nach einem der vorhergehenden Ansprüche, dadurch gekennzeichnet, dass ein Horizontalantrieb (40) für eine seitliche Verschiebung der Schneideinrichtung (11) vorgesehen ist.

9. Vorrichtung nach einem der vorhergehenden Ansprüche, dadurch gekennzeichnet, dass ein horizontaler Fahrantrieb (4) für eine Parallelverschiebung der Schneideinrichtung (11) vorgesehen ist.

## Claims

1. An apparatus for cutting a solidified block of cheese situated in a vat (1) and for transferring the cut blocks of cheese on to a receiving surface, comprising a cutting device (11) which comprises a vertical cutter blade (12) and which can be lowered and raised in the block of cheese by means of a lifting drive mechanism (7, 8, 9), **characterised in that** the cutting device (11) can be moved over the entire vat (1) in at least one vat direction and the cutter blade (12) acts transversely thereto over the entire vat width, and the cutting device (11) comprises a holding apparatus (15, 17, 20) with a gripping face (17) which can move under the block of cheese, wherein the holding device (15, 17, 20) retains the cut blocks of cheese in the cutting device during the upward movement of the cutting device (11) from the vat bottom.

2. An apparatus according to claim 1, characterised in that at least one second drive mechanism (20, 40) is provided for moving at least a part of the cutting device (11), and that a programming device (30) such as a microprocessor is preferably provided for coordinating the drive mechanisms.

3. An apparatus according to claim 2, characterised in that a pressing apparatus for the block of cheese situated in the vat (1) can also be controlled by means of the programming device (30).

4. An apparatus according to claims 2 or 3, characterised in that a feeder device for the block of cheese in the vat (1) can also be controlled by means of the programming device (30).

5. An apparatus according to any one of the preceding claims, characterised in that a blade-carrying rail (11) is provided which comprises mutually perpendicular cutter blades (12, 13), and that a movable wall (15), which is vertical in its closed position, can preferably be placed on an open side of the blade-carrying rail by means of a swivelling drive mechanism (20).

6. An apparatus according to any one of the preceding claims, characterised in that a gripping face (17) which can be slid under the block of cheese can be brought, by means of a drive mechanism (20), underneath the respective pieces of cheese which have been cut out, and can advantageously be locked in this position by means of a controllable fixing device.

7. An apparatus according to claim 6, characterised in that the fixing device can be operated pneumatically via a valve (32) which controls it, and the valve (32) can be brought into a locked position.

8. An apparatus according to any one of the preceding claims, characterised in that a horizontal drive mechanism (40) is provided for the lateral displacement of the cutting device (11).

9. An apparatus according to any one of the preceding claims, characterised in that a horizontal travelling mechanism (4) is provided for the parallel displacement of the cutting device (11).

## Revendications

1. Dispositif pour couper une masse de fromage prise en masse dans une cuve (1) et pour transporter les masses de fromage coupées sur une surface de réception, comportant un dispositif de coupe (11) qui comprend une lame verticale (12) et qui peut être levé et abaissé dans la masse de fromage au moyen d'un dispositif d'entraînement de levage (7, 8, 9), caractérisé en ce que le dispositif de coupe (11) peut être déplacé dans au moins une direction de cuve sur toute la cuve (1), la lame (12) est efficace transversalement sur toute la largeur de cuve et le dispositif de coupe (11) comprend un dispositif de retenue (15, 17, 20) avec une surface de prise (17) déplaçable sous la masse de fromage, le dispositif de retenue (15, 17, 20) retenant les masses de fromage coupées dans le dispositif de coupe (11) lors du mouvement de celui-ci du fond de la cuve vers le haut.

2. Dispositif selon la revendication 1, caractérisé en ce qu'il est prévu au moins un deuxième dispositif d'entraînement (20, 40) pour déplacer au moins une partie du dispositif de coupe (11) et, pour coordonner les dispositifs d'entraînement, il est prévu de préférence un dispositif programmé (30) comme un microprocesseur.

3. Dispositif selon la revendication 2, caractérisé en ce qu'un dispositif de pressage pour la masse de fromage se trouvant dans la cuve (1) peut aussi être commandé à l'aide du dispositif programmé (30).

4. Dispositif selon la revendication 2 ou 3, caractérisé en ce qu'un dispositif d'alimentation pour amener une masse de fromage dans la cuve (1) peut aussi être commandé à l'aide du dispositif programmé (30).

5. Dispositif selon l'une des revendications précédentes, caractérisé en ce qu'il est prévu une barre porte-lame (11) avec des lames (12, 13) perpendiculaires les unes aux autres et, de préférence, une paroi mobile (15) verticale en position fermée peut être mise contre un côté ouvert de la barre porte-lame à l'aide d'un dispositif de pivotement (20).

6. Dispositif selon l'une des revendications précédentes, caractérisé en ce qu'une surface de prise (17) qui peut se glisser sous la masse de fromage peut être amenée à l'aide d'un dispositif d'entraînement (20) sous les morceaux de fromage découpés et peut être avantageusement bloquée dans cette position au moyen d'un dispositif de fixation commandable.

7. Dispositif selon la revendication 6, caractérisé en ce que le dispositif de fixation peut être actionné de façon pneumatique par l'intermédiaire d'une soupape (32) le commandant et la soupape (32) peut être mise dans une position de blocage.

8. Dispositif selon l'une des revendications précédentes, caractérisé en ce qu'un dispositif d'entraînement horizontal (40) est prévu pour un déplacement latéral du dispositif de coupe (11).

9. Dispositif selon l'une des revendications précédentes, caractérisé en ce qu'un dispositif de déplacement horizontal (4) est prévu pour un déplacement parallèle du dispositif de coupe (11).
